# EUROPEAN PATENT SPECIFICATION

(11) **EP 3 594 521 B1**
(45) Date of publication and mention of the grant of the patent: **02.02.2022**
(21) Application number: 19464010.8
(22) Date of filing: 08.07.2019
(51) Int. Cl.: F16D 43/18, F16D 43/25

(54) **CLUTCH TYPE THERMOCOUPLE**
KUPPLUNGSARTIGES THERMOELEMENT
THERMOCOUPLE DE TYPE EMBRAYAGE

(30) Priority: 09.07.2018 RO 201800519
(43) Date of publication of application: 15.01.2020
(73) Proprietor: Stefan cel Mare University of Suceava, 720229 Suceava, County Suceava (RO)
(72) Inventor: Cernusca, Dumitru, jud. Suceava (RO); Milici, Laurentiu Dan, jud. Suceava (RO); Nitan, Ilie, jud. Suceava (RO); Poienar, Mihaela, jud. Suceava (RO); Pata, Sergiu Dan, jud. Suceava (RO)

(56) References cited:
- DE-A1- 19 624 527
- US-A- 2 320 900
- US-A- 4 868 437
- US-A1- 2015 285 315

## Description

The invention relates to a clutch type thermocoupling made on the basis of Nitinol elements (shape memory material) intended for coupling or disconnecting rotating motion systems. In order to realize a device intended for coupling or decoupling systems in motion, there are known solutions, that are constituted from clutches that use bimetallic springs or shape memory material elements for coupling or decoupling.

Document US 4 868 437 A describes a cooling fan of an electric motor which is actuated by a memory metal spring; document US 2 320 900 A describes an automatic clutch mechanism which uses bimetallic thermostat elements; document DE 196 24 527 A1 describes an actuator for a friction clutch, where the actuator uses straps or bars made of memory metall which can be electrically heated to cause change in lenght.

The disadvanges of the described solutions are related, in the first case to the fact that bimetal reacts to any temperature change and in the second case to the complexity of the dimensioning and construction.

The technical problems solved by the invention consist in constructive simplicity, increase reliability, reduction of sizing complexity, increase of speed control by coupling, and also, widening the applicability domain.

According to the invention, there is provided a clutch of thermocoupling type as defined in claim 1.

The invention has the following advantages:
- constructive simplicity;
- small size;
- can be mounted on different types of rotary drive systems;
- allows the drive systems to cool only when they reach critical temperatures or high speeds, resulting in minimal power loss of the drive motor and a reduction in wear;
- coupling and decoupling is carried out automatically when the temperature or speed changes;
- it is possible to adjust the temperature and speed at which it join, as well as the force at the level of the slide - drum;
- the drive systems no longer need another ventilation system included;
- the ventilation system may be independent of the engine.

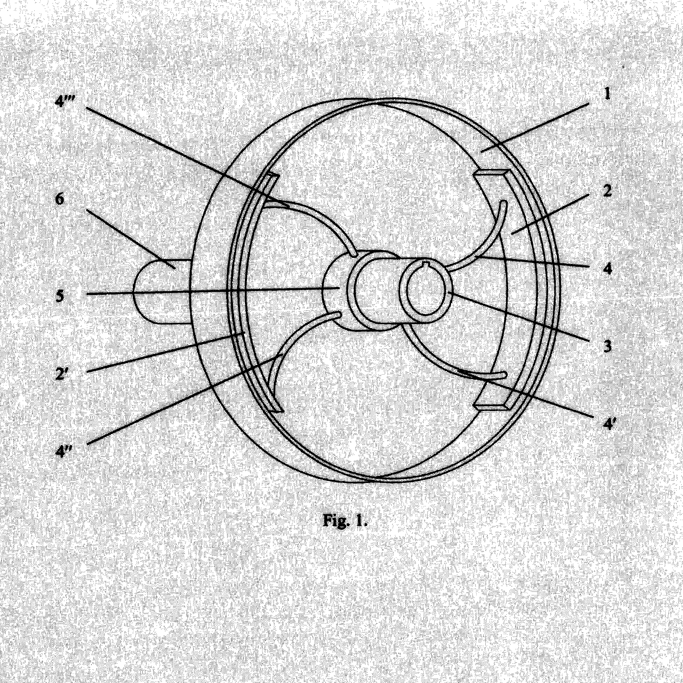

An embodiment of the invention will now be described with reference to Figure 1 which is an overview of a clutch type thermocoupling.

The clutch type thermocoupling according to the invention (figure 1) consists essentially of a metallic drum 1 having a rotating system independent of the drum 1 and consisting of the slides 2, 2′ fixed by the shaft 3, through some shape memory forms springs (nitinol) 4, 4′, 4ʺ, 4‴, stored in the spring shape, attached at one end to the flange 5 which forms a common body with the shaft 3.

The clutch type thermocoupling performs the coupling or decoupling between the metallic drum 1 fixed to the shaft 6 and the shaft 3, one of which being a drive system and the other one driven by the slides 2, 2′ at the increase of the axle 3 speed due to the centrifugal force or increasing the temperature in the coupling area by altering the curvature of the spring in the shape memory material 4, 4 ′, 4ʺ, 4‴, thus allowing ventilation systems to be coupled at high rotation speeds or at temperatures above a certain threshold. The thermocoupling may be mounted on the shaft of an electric motor and after it reaches a high temperature the nitinol springs 4, 4 ′, 4ʺ, 4‴ will tend to change its shape by pressing on the slides 2 and 2′ and thereby coupling the ventilation system by means of the shaft 6, common with the drum 1, which will cause the operating temperature of the system to decrease which will lead to decoupling, and the shape memory material elements returning to the initial state.

The clutch type thermocoupling according to the invention can be reproduced with the same characteristics and performance whenever necessary, which is an argument in favor of complying with the industrial applicability criterion.

## Claims

1. A clutch of thermocoupling type comprizing
- a drum (1) fixed to a first shaft (6),
- an independent rotating system provided inside the drum (1),
the rotating system comprising slides (2, 2') fixed to a second shaft (3) through springs (4, 4′, 4ʺ, 4‴) from shape memory material, preferably nitinol, stored in an arched form, the springs being attached at one end to a flange (5) which forms a common body with the second shaft (3); the clutch of thermocoupling type performs coupling or decoupling between the drum (1) fixed to the first shaft (6) and the second shaft (3) depending on the speed of rotation or the temperature of the rotating system by means of the shape memory material springs (4, 4′,4ʺ, 4‴) which modify their shape and the elastic constant depending on the temperature of the rotating system or its rotation speed, allowing the rotating system to be coupled to the drum (1) at high rotation speeds or at high temperatures above a certain threshold.

## Patentansprüche

1. Kupplung vom Thermokupplungstyp, umfassend eine trommel (1), die an einer ersten welle (6) befestigt ist, ein unabhängiges drehsystem, das innerhalb der trommel (1) vorgesehen ist, wobei das drehsystem gleiter (2), (2′) umfasst, die an einem zweite welle (3), durch federn (4), (4′), (4ʺ), (4‴) aus formgedächtnismaterial, vorzugsweise Nitinol, bogenförmig gelagert, wobei die federn an einem ende befestigt sind an einem flansch (5), der mit der zweiten welle (3) einen gemeinsamen körper bildet; die kupplung vom thermokupplungstyp führt das kuppeln oder entkuppeln zwischen der an der welle (6) befestigten trommel (1) und der zweiten welle (3) durch; abhängig von der rotationsgeschwindigkeit oder der temperatur des rotierenden systems mit Hilfe der Formgedächtnis-Materialfedern (4), (4ʺ), (4ʺ), (4‴), die ihre form und die elastische konstante verändern abhängig von der temperatur des rotationssystems oder seiner Rotationsgeschwindigkeit, wobei das rotationssystem bei hoher rotationsgeschwindigkeit oder bei hohen temperaturen über einem bestimmten schwellenwert an die trommel (1) gekoppelt werden kann.

## Revendications

1. Le thermocouple à embrayage constitué d'un tambour (1) fixé sur un arbre d'un système de rotation independent place l'intérieur d'un tambour (1), le système de rotation independent comprend les patins (2), (2′) fixées sur un arbre (3) par les resorts de matériel avec le mémoire de forme (4), (4′), (4ʺ), (4‴), de preference en nitinol, enregistré sous une forme arquée, les resorts étant pris à une extrémité de la bride (5) qui forme un corps commune avec l'arbre (3); le thermocouple de type embrayage effectue le couplage ou le découplage entre le tambour fixé au premier arbre (6) et le deuxiéme arbre (3); en fonction de la vitesse de rotation ou de la température du systéme d'entraînement au moyen de ressorts de matériel avec le mémoire de forme (4), (4′), (4ʺ), (4‴), qui change sa forme et son constante élastique en fontion de la témperature du systeme d'entraînement ou de son laturation, permettant d'accoupler le systéme de rotation au tambour (1) à grande laturation ou à haute température supérieure à la température seuil.
